# EUROPEAN PATENT APPLICATION

(11) **EP 3 103 968 A1**
(43) Date of publication of application: **14.12.2016**
(21) Application number: 16173119.5
(22) Date of filing: 06.06.2016
(51) Int. Cl.: F01D 21/00, G01H 1/00, F01D 17/08, F01D 21/14

(54) **SYSTEMS AND METHODS FOR MONITORING A COMPRESSOR**

(30) Priority: 09.06.2015 US 201514734726
(71) Applicant: General Electric Company, Schenectady, NY 12345 (US)
(72) Inventor: LEE, Chongchan, Atlanta, GA Georgia 30339 (US); HE, Renee, Atlanta, GA Georgia 30339 (US)
(74) Representative: Pöpper, Evamaria

(57) **Abstract**

A method includes receiving sensor data from one or more combustor cans (21) of a turbomachine (10), wherein the received sensor data includes a plurality of frequency signal amplitudes over a sample period, the one or more combustor cans (21) disposed downstream of a compressor (32) of the turbomachine (10), and the compressor (32) includes a compressor stage (34) with a plurality of blades disposed about the compressor stage (34). The process then identifies first harmonic frequencies of a first blade pass frequency of the plurality of compressor blades from the received sensor data, wherein the first blade pass frequency is based at least in part on a first quantity of the plurality of blades disposed about the compressor stage (34) and a rotational speed of the compressor stage (34). The process then determines whether one or more of the plurality of frequency signal amplitudes corresponding to the identified first harmonic frequencies exceeds a first threshold value.

## Description

### BACKGROUND

The subject matter disclosed herein relates to gas turbines. Specifically, the subject matter disclosed herein relates to monitoring a compressor coupled to a gas turbine.

Turbomachine systems may utilize compressed oxidant (e.g., air) for various purposes, such as mixing with fuel and cooling. A gas turbine of a turbomachine system may drive a compressor to generate compressed oxidant via rotating components, such as blades or vanes. Component failure in the compressor during operation of the turbomachine system may cause downtime of the turbomachine system. Additionally, component failure may be more costly than replacement or repair of the failed component. Moreover, conventional inspection systems may take a turbomachine system off-line and at least partially disassemble the compressor to inspect its components. Furthermore, in between conventional inspections, the operator is unable to monitor the condition of compressor components.

### BRIEF DESCRIPTION

Certain embodiments commensurate in scope with the original claims are summarized below. These embodiments are not intended to limit the scope of the claims, but rather these embodiments are intended only to provide a brief summary of possible forms of the claims. Indeed, the claims may encompass a variety of forms that may be similar to or different from the embodiments set forth below.

In a first embodiment, a method includes receiving sensor data from one or more combustors of a turbomachine, wherein the received sensor data includes a plurality of frequency signal amplitudes over a sample period, the one or more combustors disposed downstream of a compressor of the turbomachine, and the compressor includes a compressor stage with a plurality of blades disposed about the compressor stage. The process then identifies first harmonic frequencies of a first blade pass frequency of the plurality of compressor blades from the received sensor data, wherein the first blade pass frequency is based at least in part on a first quantity of the plurality of blades disposed about the compressor stage and a rotational speed of the compressor stage. The process then determines whether one or more of the plurality of frequency signal amplitudes corresponding to the identified first harmonic frequencies exceeds a first threshold value.

In a second embodiment, a system includes a turbomachine monitoring system including a controller configured to obtain a quantity of blades in a compressor stage of a compressor, wherein the compressor is in the turbomachine, receive sensor data from one or more combustor cans of the turbomachine, wherein the received sensor data includes a plurality of frequency signal amplitudes over a sample period, and the one or more combustor cans are disposed downstream of the compressor of the turbomachine, identify first harmonic frequencies of a first blade pass frequency of the plurality of blades from the received sensor data, wherein the first blade pass frequency is based at least in part on the quantity of the plurality of blades disposed about the compressor stage and a rotational speed of the compressor stage, and determine whether one or more of the plurality of frequency signal amplitudes corresponding to the identified first harmonic frequencies exceeds a first threshold value.

In a third embodiment, a non-transitory computer readable medium includes executable instructions that when executed cause a processor to obtain a quantity of blades in a compressor stage of a compressor, wherein the compressor is in the turbomachine. The processor then receives sensor data from one or more combustor cans of the turbomachine, wherein the received sensor data includes a plurality of frequency signal amplitudes over a sample period, and the one or more combustor cans are located downstream of the compressor of the turbomachine. The processor identifies first harmonic frequencies of a first blade pass frequency of the plurality of blades from the received sensor data, wherein the first blade pass frequency is based at least in part on the quantity of the plurality of blades located in the compressor stage and a rotational speed of the compressor stage. The processor then determines whether one or more of the plurality of frequency signal amplitudes corresponding to the identified first harmonic frequencies exceeds a first threshold value. The processor then generates an anomaly signal upon determination that one or more of the plurality of frequency signal amplitudes corresponding to the identified first harmonic frequencies exceeds a first threshold value

### BRIEF DESCRIPTION OF THE DRAWINGS

These and other features, aspects, and advantages of the present embodiments will become better understood when the following detailed description is read with reference to the accompanying drawings in which like characters represent like parts throughout the drawings, wherein:
FIG. 1 is a block diagram of an embodiment of a turbomachine system with a gas turbomachine system and a monitoring system;
FIG. 2 is an embodiment of a plot of multiple combustion dynamic data sets sampled from a sensor in a combustor can of the gas turbomachine system;
FIG. 3 is an embodiment of a plot of compressor blade pass frequency data captured from a first combustor can of the gas turbomachine system;
FIG. 4 is an embodiment of a plot of compressor blade pass frequency data captured from a second combustor can of the gas turbomachine system;
FIG. 5 is an embodiment of a plot of compressor blade pass frequency data captured from a third combustor can of the gas turbomachine system;
FIG. 6 is an embodiment of a plot of compressor blade pass frequency data captured from a fourth combustor can of the gas turbomachine system; and
FIG. 7 is a flow chart showing an embodiment of a process for detecting anomalies in a compressor of the gas turbomachine system.

### DETAILED DESCRIPTION

One or more specific embodiments of the present systems and methods will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present systems and methods, the articles "a," "an," "the," and "said" are intended to mean that there are one or more of the elements. The terms "comprising," "including," and "having" are intended to be inclusive and mean that there may be additional elements other than the listed elements.

Detecting anomalies of a compressor of a gas turbomachine system during operation may reduce downtime and reduce costs associated with operation. For example, identifying an anomaly early may allow an operator to monitor and or fix the anomaly before the component fails. Knowledge of a compressor anomaly before component failure may reduce or eliminate costly damage to other components in the turbomachine due to component failure in the compressor of a turbine while the turbine is running. However, taking a turbomachine system off-line to inspect the compressor is costly and time consuming. As such, it would be beneficial to have a way to monitor the condition of compressor components while the turbine is running without taking the turbine offline to be disassembled. Using existing combustion dynamic sensors of the combustor region, anomalies upstream of the combustion dynamic sensors in the compressor may be derived by examining the combustion dynamics sensor data at the blade pass frequencies of the various compressor stages and the harmonics thereof.

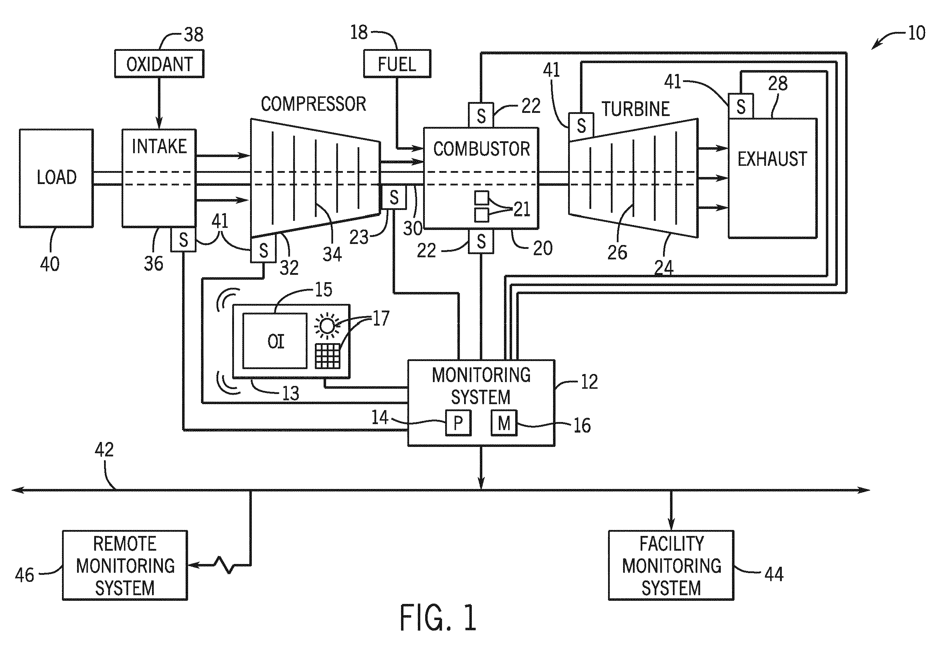

Turning now to the figures, FIG. 1 is a block diagram of an embodiment of a turbomachine system 10. The turbomachine system 10 may include various components that are monitored during operations. For example, a monitoring system 12 may be communicatively coupled to the turbomachine system 10. The monitoring system 12 may be used to monitor a variety of parameters, as described in more detail below. The monitoring system 12 may include a processor 14 to execute computer instructions and a memory component 16 (e.g., non-transitory computer readable medium) to store data and computer instructions which may be executable by the processor 14.

The turbomachine system 10 may also include an operator interface 13. The operator interface 13 (e.g., HMI or Human-Machine Interface) may provide a way for the turbomachine system 10 to communicate with an operator, and for the operator to communicate with the turbomachine system 10. The operator interface 13 may include a display 15. In some embodiments, the display 15 may be a dynamic display (e.g., LCD, plasma, or cathode ray tube), an array of LEDs, some combination of the above, or some other type of display 15. The operator interface 13 may also include operator inputs 17. The operator inputs 17 may be knobs, buttons, a keyboard, or some other way for an operator to provide inputs to the operator interface 13. In some embodiments, the operator inputs 17 may be incorporated into the display 15 (e.g., a touchscreen display). The operator may use the operator inputs 17 to control the turbomachine system 10 (e.g., select an operating routine, choose a new operating mode, etc.), or to respond to user perceptible indications. The operator interface 13 may be used to alert the operator with a user perceptible indication when the monitoring system 12 detects an anomaly in the turbomachine system 10. To communicate an alert, the operator interface 13 may make a noise, show an alert message on the display 15, flash lights, vibrate, some combination thereof, or some other method to obtain the operator's attention.

The turbomachine system 10 may use liquid or gas fuel to drive the turbomachine system 10. The fuel may be any suitable gaseous or liquid fuel, such as natural gas, liquefied natural gas (LNG), syngas, associated petroleum gas, methane, ethane, butane propane, biogas, sewage gas, landfill gas, coal mine gas, gasoline, diesel, naphtha, kerosene, methanol, biofuel, or any combination thereof. Fuel may be directed from a fuel supply 18 to the combustor section 20. The fuel may be mixed with oxidant, such as air, at one or more points between the fuel supply 18 and the combustor section 20. The oxidant-fuel mixture combusts in one or more chambers 21 (e.g., combustor cans) of the combustor section 20, thereby creating hot pressurized exhaust gases. Sensors 22 may be disposed on or within the combustor cans 21 to monitor characteristics of the turbomachine system 10, such as combustion dynamics of the combustor cans 21. In some embodiments, the turbomachine system 10 may include cans disposed about the shaft 30. Each combustor can 21 may direct hot exhaust gases into a turbine 24, which may have one or more stages 26, toward an exhaust outlet 28. Each stage may include a set of blades coupled to a respective rotor 26, which are attached to a shaft 30. As the hot exhaust gases cause rotation of turbine rotors 26, the shaft 30 rotates to drive a compressor 32. Eventually, the turbomachine system 10 exhausts the exhaust gases through the exhaust outlet 28.

One or more stages 34 of the compressor 24 compress the oxidant (e.g., air) from the oxidant intake 36. The one or more stages 34 may be coupled to the shaft 30. Each stage 34 includes blades that rotate to increase the pressure to provide compressed oxidant. As the blades within the compressor 32 rotate, oxidant is drawn from an oxidant supply 38.

The compressed discharge oxidant from the compressor 32 is directed into the one or more combustor cans 21 in the combustor section 20 to mix with the fuel. For example, fuel nozzles of the combustor section 20 may inject fuel into compressed oxidant in the combustor section 20 in a suitable ratio for combustion. For example, suitable combustion may substantially completely combust the fuel with minimal emissions.

The shaft 30 may also be coupled to a load 40, which may be a mobile or a stationary load, such as a propeller on an aircraft or an electrical generator in a power plant. The load 40 may include any suitable device capable of being powered by the rotational output of the turbomachine system 10.

The turbomachine system 10 may include one or more sets of sensors configured to monitor parameters related to the operation and performance of the gas turbomachine system 10. In the present embodiment, sensors 22 (e.g., dynamic pressure sensors) may disposed in or on the combustor cans 21. In some embodiments, there may be one sensor 22 per combustor can 21. In other embodiments, there may be multiple sensors 22 per combustor can 21. In still other embodiments, there may be more combustor cans 21 than sensors 22 (e.g., a sensor 22 for every two combustor cans 21). In such an embodiment, the sensors 22 may be distributed evenly among the combustor cans 21 (e.g., one sensor 22 in every second or every fourth combustor can 21). The sensors 22 may also be distributed to focus on cans 21 or areas of the combustor section 20 which may be of interest. Sensors 22 may be disposed inside the combustor cans 21 or outside the combustor cans 21. The sensor 22 may be coupled to the inside or outside of the combustor can 21 wall, or be embedded within the combustor can 21 wall. The sensors 22 may be dynamic pressure sensors, pressure transducers, piezometers, or any other kind of sensor capable of measuring pressure in the combustor cans 21. One or more sensors 22 disposed inside the combustor cans 21 of the turbomachine system 10 may communicate a signal to the monitoring system 12 that indicates the pressure inside the combustor cans 21. In some embodiments, the monitoring system 12 may take high frequency samples (e.g., 0.1, 0.2, 0.5, 1.0, 2.0, or 5.0 second samples) from the sensors 22 in periodic time intervals (e.g., once an hour, once a minute, once every 5 seconds, etc.). In other embodiments, the monitoring system 12 may sample from the sensors 22 continuously. As may be appreciated, the sensors 22 may be used to monitor the dynamic pressure changes within the respective combustor cans 21 during operation of the turbomachine system 10 while the compressor 32 is operating.

The turbomachine system 10 may include other sensors 23. For example, the turbomachine system 10 may include sensors 23 configured to sense a parameter indicative of the rotation speed of rotating parts within the turbomachine system 10, or some other parameter useful in monitoring or controlling the turbomachine system. The sensors 22, 23 may be accelerometers, piezoelectric sensors, capacitive sensors, electromagnetic sensors, microelectromechanical system (MEMS) sensors, Hall Effect sensors, magnetostrictive sensors, and/or any other sensor used to monitor the turbomachine system 10.

The monitoring system 12 may determine the blade pass frequency (BPF) of each stage of compressors by transforming time series waveform data to frequency data through Fast Fourier Transform. The BPF is the frequency at which the blades of a compressor stage 34 pass by a stationary location. The BPF may be calculated by multiplying the number of blades on a compressor stage 34 by the speed (in rpm) at which the compressor stage 34 spins. For example, suppose a compressor stage 34 is spinning inside a cylindrical cavity and a sensor is mounted at a point (e.g. 12 o'clock) around the circumference of the cylindrical cavity. If the compressor stage 34 has 12 blades and spins at 100 rpm, from the point of view of the sensor, a blade will pass by at a rate of 1,200 times per minute. The number of blades may be input by the operator or a service technician (via operator inputs 17), or from a remote location via a network. The number of blades may also be obtained from the memory component 16 in the monitoring system 12, or determined by the monitoring system. In some embodiments, the number of blades may be obtained during setup or maintenance of the turbomachine system 10. The number of blades may also be obtained each time the turbomachine system 10 goes through startup. In some embodiments, the rotational speed of the compressor stage 34 may be determined by one or more sensors 23, such as tachometers, already in use in the turbomachine system. The sensors 23 may be Hall effect sensors, magnetic field sensors, or some other kind of sensor capable of sensing a parameter indicative of rotation speed. Additionally, the sensors 23 may sense rotational speed from the shaft 30, compressor stages 34, the turbine stages 26, or some other area of the turbomachine system. In other embodiments, the rotational speed of the compressor stage 34 may be set by an operator to correspond to a steady state phase of operation.

Relative growth in amplitude of the sensor 22 signal at the BPF and the various harmonic frequencies (e.g., the blade pass frequency multiplied by 1.0, 1.5, and 2.0) may correspond to anomalies in the compressor 32. That is, the signals from the pressure sensors 22 in the combustor cans 21 may correspond to anomalies in the compressor 22. In some embodiments, the sensors 22 may capture broad ranges of spectrum data so that they may include multiple harmonics of BPF.

It should be understood that some embodiments of the turbomachine system 10 may include additional sensors 41, such as inlet sensors 41, outlet sensors or other sensors disposed throughout the turbomachine system 10. The sensors 41 may measure, for example, environmental conditions, such as ambient temperature and ambient pressure. The sensors 41 may also measure parameters related to the operation and performance of the turbomachine system 10, such as, exhaust gas temperature, combustor temperature, combustor pressure, gas temperature, engine fuel flow, exhaust flow, vibration, clearance between rotating and stationary components, compressor discharge pressure, gas composition such as emissions (e.g., carbon monoxide, nitrogen oxides, carbon dioxide, particulate count), and turbine exhaust pressure. The sensors 41 may include, but are not limited to, thermocouples, proximity sensors, eddy current sensors, ultrasonic sensors, velocity sensors, vibration sensors, pressure sensors, clearance sensors, accelerometers, gyroscopes, chemical sensors, optical sensors, and the like. The sensors 41 may also be configured to monitor turbomachine parameters related to various operational phases (e.g., start-up, steady state, transient state, and shut down) of the turbomachine system 10. Each sensor 41 may transmit electrical signals to the monitoring system 12 based at least in part on the one or more parameter monitored by the respective sensor 41. The monitoring system 12 may then process the electrical signals from the sensors 41 to determine the parameters of the turbomachine system 10.

The monitoring system 12 may derive pressure measurements, keyphasor measurements (e.g., phase relationship between vibration components and timing marks on the shaft 30), relative vibration (e.g., using proximity probes), axial positions, radial positions, casing velocity, casing acceleration, temperatures, differential expansion/case expansion, overspeed detection, rotor wheel acceleration, actuator positions (e.g., valve positions, linear actuator positions), shaft 30 eccentricity, rolling element bearing activity monitor (REBAM®) data, vibration measurements (e.g., axial vibration, radial vibration), speed measurements, clearance measurements (e.g., distance between a rotating component and a stationary component), flow measurements, or a combination thereof. Accordingly, operating conditions may be derived, including normal operations, abnormal operations, and so on. Pressure measurements, taken using sensors 22 in and/or around the combustor 20 have typically been used to monitor combustion dynamics. For example, pressure measurements taken from dynamic pressure sensors 22 in the combustor 20 may help the operator understand whether the fuel/oxidant mixture, various feed rates, are set for desired turbomachine performance. However, some embodiments of the systems and methods disclosed herein utilize pressure measurements previously used to monitor combustion dynamics to detect anomalies in the compressor 32.

In some embodiments, the monitoring system 12 may be connected to a network 42. The network 42 may be wired, wireless, or a combination thereof. In some embodiments, the monitoring system 12 may be connected, via the network 42 to a facility monitoring system 44, capable of monitoring one or more turbomachine systems 10 in a facility. A facility (e.g., power plant, research lab, etc.) may contain one or more facility monitoring systems 44 for monitoring one or more turbomachine systems 10. The monitoring system 12 and/or the facility monitoring system 44 may also be in communication with a remote monitoring system 46 via the network 42. The remote monitoring system 46 may be used to monitor the one or more turbomachine systems 10 from a remote location, such as another facility. In some embodiments, the remote monitoring system 46 may be used by the entity controlling the turbomachine system 10, the owner of the turbomachine system 10, the manufacturer of the turbomachine system 10, or a service provider in order to monitor the turbomachine system 10.

The measurements based at least in part on the electrical signals from the sensor 22 may be used to derive alerts, alarms, or other user perceptible indications. For example, the alerts and/or alarms may be generated by the monitoring system 12, and displayed by the operator interface 13. In some embodiments, the alerts may be generated by the facility monitoring system 44, or the remote monitoring system 46, or both. The alerts and/or alarms may be directed toward the operator, the entity in control of the turbomachine system 10, a service provider, and the like. The alerts may include error messages on the display 15, noises, flashing lights, vibration, haptic feedback, emailing service, some combination thereof, or another method of calling the operator's attention.

Threshold values may be set by the operator, a service technician, the manufacturer, via the facility monitoring system 44, the remote monitoring system 46, by software update, or some other way. The threshold values may be raw numbers or may be based on a percent change from previously collected or expected data. Frequency signal amplitudes of the collected data that exceed the set threshold values may indicate an anomaly in the compressor 32. In some embodiments, frequency signal amplitudes of the collected data that exceed the threshold values may trigger an alert for the operator. In some embodiments, the turbomachine system 10 may be configured with multiple levels of threshold values, corresponding to escalating seriousness of the anomaly. For example, the frequency signal amplitudes exceeding a first threshold may trigger an alert for the operator. The frequency signal amplitudes exceeding a second threshold may trigger an alert to the facility monitoring system 44 or the remote monitoring system 46. In some embodiments, frequency signal amplitudes exceeding another threshold may trigger automatic shutdown of the turbomachine system 10.

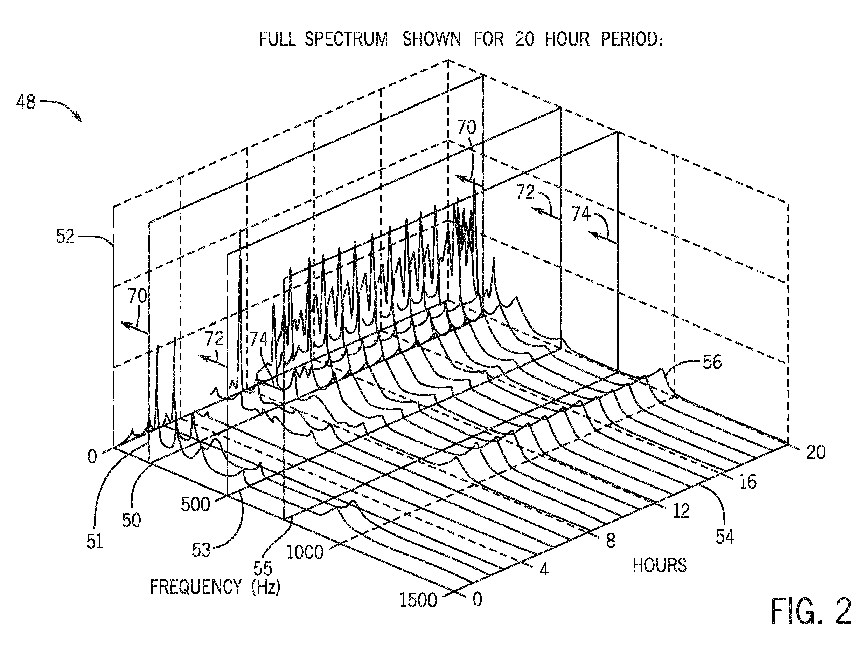

FIG. 2 is a plot 48 of 20 data sets sampled from sensors 22 in a combustor can 21 once an hour over a 20-hour period. The x-axis 50 of the plot is frequency in hertz (Hz) and the y-axis 52 is frequency signal amplitude. The units of frequency signal amplitude may vary from embodiment to embodiment, but may be pressure (in psi, bar, torr, pascal, etc.), volts, decibels (dB), engineering units, or raw data. The z-axis 54 is time in hours. Each curve 56 is a spectrum plot of a data set captured over a period of time (in this embodiment, about 0.2 seconds). The planes 51, 53, 55 along the x-axis represent a blade pass frequency (BPF) and harmonics of the BPF. For example, plane 51 may represent the blade pass frequency. Plane 53 my represent the 1.5 harmonic (the BPF multiplied by 1.5). Plane 55 may represent the 2.0 harmonic (the BPF multiplied by 2.0). Relative peaks in amplitude at the BPF and its harmonics may be indicative of a compressor anomaly. Accordingly, the plot 48 illustrates one sample of data taken from a single combustor can 21 every hour for 20 hours, resulting in 20 curves 56. Note that this is merely an example and that the amount of time data is sampled, the time between samples, and the number of samples may vary as desired. Moreover, it may be appreciated that plots 48 for turbomachine systems 10 with multiple combustor cans 21 may have multiple spectrum curves for each sample time. Note that many of the curves 56 shown in FIG. 2 include peak amplitudes at the same frequencies. This may be indicative of an anomaly (e.g., dent, chip, crack, void, deposit) of one of the rotating components of the compressor stages. It should also be noted that the curves for hours 3, 4, and 5 have no peaks. This is because the turbomachine system 10 was not running when the samples were taken.

The monitoring system 12 may evaluate one or more spectrum curves 56 in real time, in near real time, on a delay, or after the fact. For example, if the monitoring system 12 is configured to evaluate data in real time or near real time, the monitoring system 12 evaluates sensor data as it arrives from the sensors 22 while the turbomachine system is running. A real time or near real time evaluation may be implemented when the operator wants to be aware of compressor 32 anomalies as soon as possible after the anomaly develops. An operator may prefer real time or near real time evaluation if anomalies negatively affect the compressor 32 performance, or if the compressor 32 anomalies may lead to component failure in a short period of time. Delayed evaluation may be configured such that the monitoring system 12 evaluates sensor data a short time period (e.g. between 2 minutes and 60 minutes) after the monitoring system 12 has obtained the sensor data from the sensors 22. Delayed evaluation may be preferable to an operator if the turbomachine system 10 may be capable of running for a few minutes or hours with a compressor 32 anomaly without unreasonably sacrificing performance or risking component failure. Delayed evaluation may also be suitable if the processor 14 lacks the power to evaluate the data in real time. After the fact evaluation may be configured such that the monitoring system 12, facility monitoring system 44, or remote monitoring system 46 evaluates the sensor data hours or days after the sensor data has been collected. After the fact evaluation may be preferable to an operator if the turbomachine system 10 may be capable of running for long periods of time with a compressor 32 anomaly without unreasonably sacrificing performance or risking component failure. After the fact evaluation may also be suitable if the processor 14 lacks the power to evaluate the data in real time. In some embodiments, the monitoring system 12 may utilize one evaluation timeframe (e.g., real time or near-real time), while the facility monitoring system 44 or the remote monitoring system 46 may utilize a different evaluation timeframe (e.g., delayed evaluation or after the fact evaluation).

The monitoring system may evaluate a given curve 56 in view of set thresholds or ranges, by comparing the curve 56 to curves 56 from other combustor cans 21, or comparing the curve 56 to a prior measurement data. If the amplitude at the blade pass frequency, or one of the harmonics of the blade pass frequency, exceeds the threshold, the sensor 22 data may indicate an anomaly in the compressor. Possible compressor anomalies may include dents, bends, liberation, cracks, and the like. In some cases, the turbomachine system 10 may be able to continue operating for weeks or months with an anomaly without incident. In other cases, some anomalies may have a relatively short time between the development of the anomaly and component failure. In such cases, the operator may desire to start shutdown on the turbomachine system 10 as soon as the anomaly is identified.

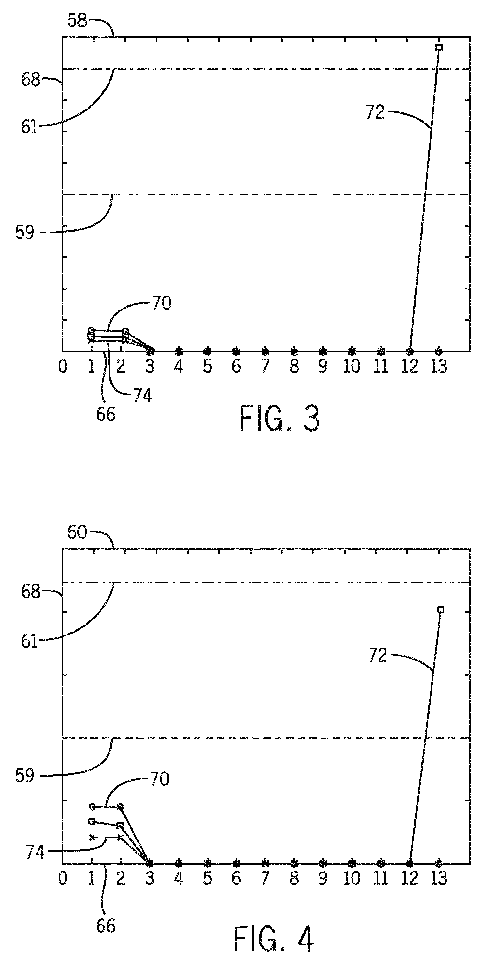

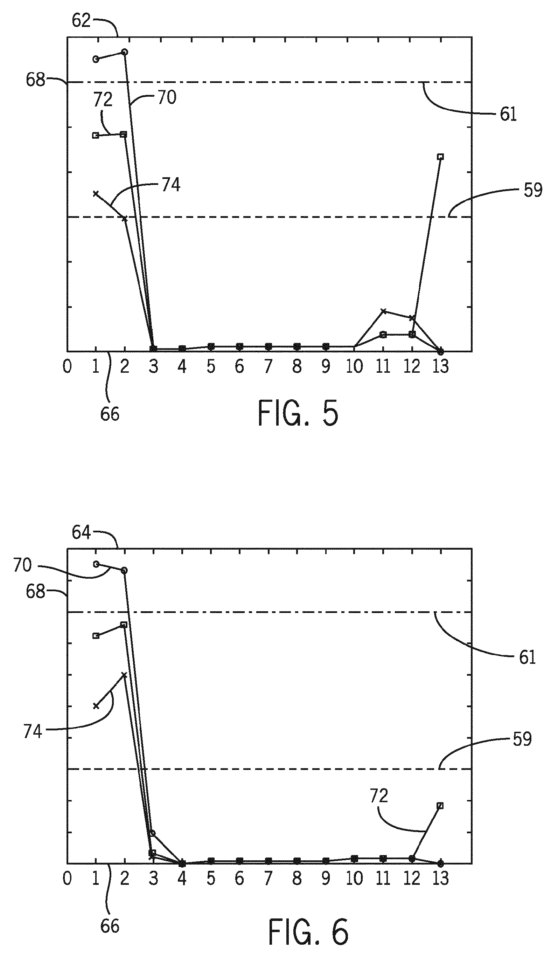

FIGS. 3-6 show sample plots 58, 60, 62, 64 of data captured from a first, second, third, and fourth combustor cans 21, respectively, over 13 different sample windows. Each of the plots 58, 60, 62, 64 in FIGS. 3-6 shows the frequency signal amplitude of each of 13 measurements in 4 combustor cans 21 at harmonic ratios of 1.0, 1.5, and 2.0 of a certain blade pass frequency (BPF). Note that each of FIGS. 3-6 has a line 70 for a BPF, a line 72 for the 1.5 harmonic, and a line 74 for the 2.0 harmonic (best shown in FIG. 5). That is, the line 70 shown in FIG. 3 corresponds to the 13 measurement points of the frequency signal amplitude for a first combustor can 21, the line 72 shown in FIG. 3 corresponds to the 13 measurement points of the frequency signal amplitude at the 1.5 harmonic, and the line 74 shown in FIG. 3 corresponds to the 13 measurement points of the frequency signal amplitude at the 2.0 harmonic. In a similar manner, the lines 70, 72, and 74 of FIGS. 4, 5, and 6 correspond to the 13 measurement points of the respective harmonic of a BPF for second, third, and fourth combustor cans 21. Moreover, the measurement points of lines 70, 72, 74 of FIGS. 3-6 may be similar to the intersections of curves 56 with respective cross-sectional planes 51, 53, 55 of FIG. 2, where the cross-sectional planes 51, 53, and 55 correspond to the harmonics (e.g., 1.0, 1.5, 2.0) of the BPF.

For example, if a stage 34 of the compressor has 36 blades and rotates at 1,000 rpm, then a blade would pass by a stationary location 36,000 times per minute. Converted to Hz (cycles per second), the blade pass frequency is 600 Hz. Multiplying the BPF by 1.5, the 1.5 harmonic frequency is 900 Hz. Multiplying the BPF by 2.0, the 2.0 harmonic is 1,200 Hz. Data would then be taken from a sensor 22 in a combustor can 21. A spectrum plot 48 of such data was shown in FIG. 2. Cross sections are then taken from the spectrum plot 48 at the BPF and the harmonic frequencies of interest. In the present example, plane 51 in FIG. 2 would be located at 600 Hz, the BPF. Plane 53 in FIG. 2 would be located at 900 Hz, the 1.5 harmonic frequency. Plane 55 would be located at 1,200 Hz, the 2.0 harmonic frequency. The frequency signal amplitudes for the three frequencies 51, 53, 55, would then be consolidated into a single graph, which would look something like FIGS. 3-6. For example, one line (e.g., line 70) would represent the frequency amplitude at the BPF (600 Hz) in a single combustor can 21, across 13 measurements. A second line (e.g., line 72) would represent the frequency amplitude at the 1.5 harmonic frequency (900 Hz) in the same combustor can 21 across the same 13 measurements. A third line (e.g., line 74) would represent the frequency amplitude at the 2.0 harmonic frequency (1,200 Hz) in the same combustor can 21 across the same 13 measurements.

One or more thresholds 59, 61 (shown in FIGS. 3-6) may be set. These thresholds 59, 61 may be set by the operator immediately before start up. In some embodiments, the one or more thresholds may be set by the operator, a service technician, by software update, by the manufacturer, or some other way days, weeks, months, or years before startup. When a frequency signal amplitude exceeds a threshold, it may be due to a compressor anomaly. The one or more thresholds 59, 61 may have different levels for different levels of seriousness of the identified compressor anomaly. For example, the first threshold 59 may indicate a relatively minor anomaly and may trigger an alert, alarm, or other user perceptible indication to the operator, but otherwise allow the turbomachine system 10 to continue running. In some embodiments, the second trigger 61 may indicate a more serious anomaly. For example, when a frequency signal amplitude exceeds a second threshold 61, it may be indicative of a more serious compressor anomaly such that continued operation may risk component failure. In some embodiments, the monitoring system 12 may be configured to begin automatic shutdown of the turbomachine system 10 when the frequency signal amplitude exceeds the second (or higher level) threshold 61 value. Moreover, an alert, alarm, or other user perceptible indication may be sent to the facility monitoring system 44 or the remote monitoring system 46 when the second (or higher level) threshold 61 is exceeded.

It should be understood, however, that FIGS. 3-6 and the preceding discussion are examples and not intended to limit the disclosed embodiments. Other embodiments of the system may examine more, fewer, or different harmonic frequencies, may spin at different rotational velocities, may have more or fewer blades, and so forth. Note, for example, in FIG. 5 that the peaks in amplitude in the first, second, and thirteenth data sets exceed the first threshold 59 and may be indicative of an anomaly in the compressor.

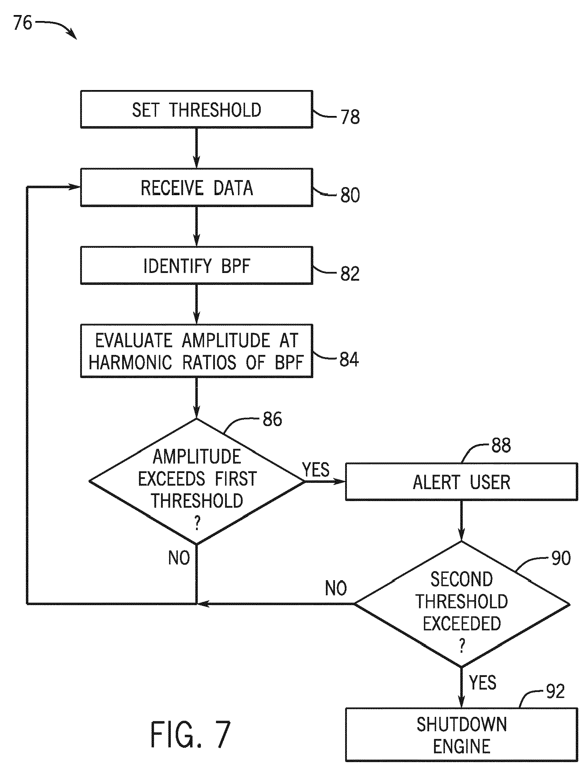

FIG. 7 is a flow chart showing a process 76 for detecting anomalies in the compressor 32 using data from sensors 22 in the combustor 20. The blocks of the process 76 may be implemented as computer instructions or executable code stored in the memory 16 and executable by the processor 14 of the monitoring system 12. In block 78, the monitoring system 12 sets the one or more threshold values of sensor data amplitude for an alarm and/or an alert. The one or more thresholds may be set by the user or turbine operator via the operator interface, obtained from the facility monitoring system 44 or the remote monitoring system 46 via the network 42, stored in memory 16, or calculated by the processor 14. For example, the thresholds may be input to the monitoring system 12 by the operator, a service technician, at the time of manufacture, by software update, by the facility monitoring system 44, or by the remote monitoring system at some point before operation, stored in memory 16, and updated as necessary. In other embodiments, the thresholds may be entered each time that the turbomachine 10 goes through start up.

The thresholds may be set directly (e.g., a specific pressure value) or indirectly by specifying a percent change versus previous sensor data sets, versus data sampled from other combustor cans 21, or some other metric. For example, rather than a raw frequency signal amplitude as a threshold value, a percent increase in frequency signal amplitude at a given harmonic frequency (e.g. 70% increase) may trigger an alert. Similarly, the monitoring system 12 may be configured to track percent changes in frequency signal amplitude over several measurements. For example, the monitoring system 12 may track the rate of change over 3 or more data sets and predict when the frequency signal amplitude at a given frequency may exceed the threshold value.

In other embodiments, similar techniques may be used to predict the time until component failure. In some embodiments, rather than thresholds stored in memory 16, instructions for calculating the thresholds may be stored in memory 16. For example, a program may be stored in memory 16 that when executed, determines threshold values based upon measurements from sensors 22, 23, 41 disposed in the turbomachine system 10. In some embodiments there may be two levels of threshold values, one to trigger a warning, and the other to trigger shutdown of the engine system 10. In such an embodiment, when a frequency signal amplitude exceeds the first threshold, the operator is alerted and may then make a decision as to how to proceed (e.g., shut down the engine, continue the planned operation, run the turbomachine system 10 in a safe mode, run an abbreviated operation, etc.). The second threshold may be an indication that an anomaly is at an increased risk of leading to component failure during operation. When the second threshold is exceeded, to prevent damage to the turbine, the monitoring system 12 may be configured to automatically shut down the turbomachine system 10, and/or to alert a supervisory monitoring system (e.g., facility monitoring system 44 or remote monitoring system 46).

In block 80, the monitoring system 12 receives sensor data from sensors 22 in the one or more combustor cans 21. The sensor data may include one or more frequency signal amplitudes, each corresponding to a frequency range over a sample period. The sample window may be any amount of time in which spectrum data may be obtained. For example, the sample period may be 0.1, 0.2, 0.5, 0.8, 1.0, 1.5, 2.0 seconds, or any other period of time. In some embodiments data may be sampled continuously. In other embodiments, samples may be taken at given intervals, for example, once a day, once an hour, every half hour, every 5 minutes, once a minute, etc.

In block 82 the monitoring system 12 identifies the blade pass frequency (BPF) of the one or more compressor stage 34 of interest in the compressor. The blade pass frequency is the number of blades on a compressor stage 34 multiplied by the rotational speed at which the compressor stage 34 is spinning. Given that the blade pass frequency varies with the rotational speed of the compressor stage 34, the process may recalculate the blade pass frequency if the speed of the compressor stage 34 changes. The blade pass frequency may be calculated by the processor 14 based on the sensor 22 data, input by a user or operator, or obtained in some other way. In some embodiments, the operator may input the number of blades, and the rotational speed may be determined based on measurements by sensors 23. From these values, the processor 14 may determine the BPF. In block 82 the monitoring system 12 may also calculate the various harmonic frequencies of interest based on ratios stored on the memory 16, received from the user or operator, or obtained in some other way. For example, the operator may be interested in particular harmonic ratios of the blade pass frequency (e.g., 1.0, 1.5, 2.0). The harmonic frequencies may be determined by multiplying the harmonic ratios by the blade pass frequency. The monitoring system 12 may be configured to examine frequency signal amplitudes at any number of ratios of the BPF. For example, the monitoring system 12 may be configured to evaluate frequency signal amplitudes at 2, 3, 4, 5, 6, 7, 8, 9, 10, or more ratios of the BPF. In some embodiments, the harmonic ratios may be limited by the frequency spectrum of the sensors 22. The harmonic ratios of interest may be input by the operator just before startup of the turbomachine system 10, or input well before startup of the turbomachine system 10, and stored in memory 16. In some embodiments, the ratios may be input by a service technician, by the manufacturer, or via the network 42 by the facility monitoring system 44 or the remote monitoring system 46.

In block 84, the monitoring system 12 determines whether one or more of the frequency signal amplitudes from the sensor data at the harmonic frequencies exceed the given threshold value or values. At node 86, if the frequency signal amplitude does not exceed the first threshold, the monitoring system returns to block 80 to receive more data. If the monitoring system determines at node 86 that the frequency signal amplitude exceeds the first threshold, the monitoring system moves to block 88 and alerts the user. The user may be alerted in a number of different ways, including proprietary error codes, via a display, sounds or audio notifications, on a display, via text, and the like. In some embodiments, the monitoring system may alert the user by scheduling a maintenance interval. Moreover, where a maintenance interval is presently scheduled, the monitoring system may alert the user by scheduling an earlier time for the maintenance interval to address the anomaly (e.g., sample data that exceeds the first threshold).

At node 90, if the frequency signal amplitude does not exceed the second threshold, the monitoring system 12 returns to block 80 and samples more data. If the frequency signal amplitude exceeds the second threshold, the monitoring system 12 moves to block 92 and begins an automatic shutdown process of the engine. Once the engine has been shutdown, the operator or a service technician may inspect the compressor to investigate why the second threshold was exceeded. It should be understood that some embodiments may not include a second level threshold value that prompts shut down or some other action of the turbomachine system 10. Some embodiments may only have a single threshold that, when exceeded, alerts the operator.

Technical effects of the disclosed techniques may reduce off-line time and reduce operating costs of the turbomachine system by providing a way to monitor compressor component condition while the turbomachine is operating. Additionally, the techniques described herein may allow an operator to monitor compressor component condition between inspections. Furthermore, because the disclosed techniques may utilize downstream sensors that may already be in use to monitor combustion dynamics, the disclosed techniques may be implemented without the addition of more sensors, thus increasing the functionality of the sensors already in place. The disclosed techniques may also enable an increase in intervals between scheduled maintenance periods and reduce the probability of component failure during operation. In some embodiments, data may be aggregated with other sensor data to identify failure mode trends, inform decisions on service intervals, etc.

This written description uses examples to disclose embodiments of the systems and methods, including the best mode, and also to enable any person skilled in the art to practice the embodiments, including making and using any devices or systems and performing any incorporated methods. The patentable scope of the systems and methods is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A method comprising:
receiving sensor data from one or more combustor cans (21) of a turbomachine (10), wherein the received sensor data comprises a plurality of frequency signal amplitudes over a sample period, the one or more combustor cans (21) disposed downstream of a compressor (32) of the turbomachine (10), and the compressor (32) comprises a compressor stage (34) with a plurality of first blades disposed about the compressor stage;
identifying first harmonic frequencies of a first blade pass frequency of the plurality of first blades from the received sensor data, wherein the first blade pass frequency is based at least in part on a first quantity of the plurality of first blades disposed about the compressor stage (34) and a rotational speed of the compressor stage (34); and
determining whether one or more of the plurality of frequency signal amplitudes corresponding to the identified first harmonic frequencies exceeds a first threshold value.

2. The method of claim 1, further comprising providing a user perceptible indication of an anomaly in the compressor (32) when determining that one or more of the plurality of frequency signal amplitudes corresponding to the identified first harmonic frequencies exceeds the first threshold value.

3. The method of claim 2, wherein the user perceptible indication is provided to a service provider.

4. The method of claim 2, further comprising scheduling a maintenance period for the turbomachine (10) based on the user perceptible indication.

5. The method of claim 1, wherein the first harmonic frequencies are ratios of the first blade pass frequency comprising 1.0, 1.5, and 2.0.

6. The method of claim 1, wherein the turbomachine (10) is a gas turbine.

7. The method of claim 1, wherein the sensor data is received from one or more dynamic pressure sensors (22) coupled to the one or more combustor cans (21), and each combustor can (21) comprises one or more dynamic pressure sensors (22).

8. The method of claim 1, wherein the first threshold value is based at least in part on a history of frequency signal amplitudes corresponding to the first blade pass frequency.

9. The method of claim 1, further comprising identifying second harmonic frequencies of a second blade pass frequency of the compressor (32) from the received sensor data, wherein the second blade pass frequency is based at least in part on a second quantity of the plurality of second blades disposed about the compressor stage (34) and the rotational speed of the compressor stage (34); and
determining whether one or more of the identified second harmonic frequencies exceeds a second threshold value.

10. A system comprising:
a turbomachine monitoring system (12) comprising:
a controller (12) configured to:
obtain a quantity of a plurality of blades disposed about a compressor stage (34) of a compressor (32), wherein the compressor (32) is disposed in the turbomachine (10);
receive sensor data from one or more combustor cans (21) of the turbomachine (10), wherein the received sensor data comprises a plurality of frequency signal amplitudes over a sample period, and the one or more combustor cans (21) is disposed downstream of the compressor (32) of the turbomachine (10);
identify first harmonic frequencies of a first blade pass frequency of the plurality of blades from the received sensor data, wherein the first blade pass frequency is based at least in part on the quantity of the plurality of blades disposed about the compressor stage (34) and a rotational speed of the compressor stage (34); and
determine whether one or more of the plurality of frequency signal amplitudes corresponding to the identified first harmonic frequencies exceeds a first threshold value.

11. The system of claim 10, comprising a feedback system coupled to the controller, wherein the feedback system is configured to provide a user perceptible indication of an anomaly in the compressor (32) upon determination by the controller (12) that one or more of the plurality of frequency signal amplitudes corresponding to the identified first harmonic frequencies exceeds a first threshold value.

12. The system of claim 10, wherein the controller (12) is configured to transmit a user perceptible indication to a service provider upon determination that one or more of the plurality of frequency signal amplitudes corresponding to the identified first harmonic frequencies exceeds a first threshold value.

13. The system of claim 10, wherein the controller (12) is configured to determine combustion dynamics of the one or more combustor cans (21).

14. The system of claim 10 comprising the turbomachine (10).

15. The system of claim 10, wherein the controller (12) is further configured to determine threshold based on history of frequency signal amplitudes from the turbomachine (10).
